# EUROPÄISCHE PATENTANMELDUNG

(11) **EP 2 050 545 A1**
(43) Veröffentlichungstag der Anmeldung: **22.04.2009**
(21) Anmeldenummer: 08450141.0
(22) Anmeldetag: 18.09.2008
(51) Int. Cl.: B25J 15/04, B25J 19/00, B25J 19/06, F16D 27/01

(54) **Vorrichtung mit Magnetüberlastsicherung für das Werkzeug eines Manipulators**

(30) Priorität: 17.10.2007 AT 6362007
(71) Anmelder: Perndorfer Maschinenbau KG, 4720 Kallham (AT)
(72) Erfinder: Katzlberger, Christian, 4743 Peterskirchen (AT); Humer, Johann, 4724 Neukirchen am Walde (AT)
(74) Vertreter: Hübscher, Helmut

(57) **Zusammenfassung**

Die Erfindung betrifft eine Vorrichtung zum Manipulieren eines Werkzeuges (1), insbesondere eines Bearbeitungs- oder Messwerkzeuges, mit einem an einem Manipulator (2) angeordneten Träger (3), an dem das Werkzeug (1) mit einem dem Werkzeug (1) zugeordneten Adapter (4) lösbar befestigt ist. Um vorteilhafte Konstruktionsverhältnisse zu schaffen, wird vorgeschlagen, dass die lösbare Befestigung des Werkzeuges (1) über das Adapter (4) am Träger (3) mittels einer Magnetkupplung (5) erfolgt, wobei das Adapter (4) und der Träger (3) über wenigstens eine Führung (6) in Kupplungsstellung gegeneinander ausgerichtet gehalten sind.

## Beschreibung

Die Erfindung betrifft eine Vorrichtung zum Manipulieren eines Werkzeuges, insbesondere eines Bearbeitungs- oder Messwerkzeuges mit einem an einem Manipulator angeordneten Träger, an dem das Werkzeug mit einem dem Werkzeug zugeordneten Adapter lösbar befestigt ist.

Heute ist es allgemein üblich beliebige Werkstücke oder dgl. automatisiert mit Bearbeitungswerkzeugen zu bearbeiten oder mit Messwerkzeugen, wie Prüfköpfen, Messgeräten u. dgl. zwecks Qualitätssicherung zu überprüfen. Dazu sind die Werkzeuge, wie insbesondere auch Prüfköpfe oder Messgeräte an einem Manipulator, einem beliebigen Roboter oder dgl. befestigt und werden mit diesem üblicherweise entlang der Oberfläche des Werkstückes verfahren. Um dabei verschiedenste Werkzeuge, wie unter anderem Prüfköpfe oder Messgeräte mit einem Manipulator verwenden zu können, sind üblicherweise zwischen Manipulator und Werkzeug entsprechende Adapter vorgesehen, die eine definierte Befestigung der unterschiedlichsten Werkzeuge an ein und dem selben Träger ermöglichen. Zu diesem Zweck sind üblicherweise Klemm- bzw. Schraubverbindungen zwischen Adapter und Träger vorgesehen, die einen sicheren Halt des Werkzeuges am Träger gewährleisten. Für den Fall, dass insbesondere Messgeräte bzw. Prüfköpfe mit einem derartigen Manipulator zur Vermessung eines Werkzeuges eingesetzt werden sollen, ist im Falle einer Kollision des Prüfkopfes bzw. Messgeräte mit einem Werkstück meist mit erheblichen Schäden an den teuren Prüfköpfen zu rechnen, wenn diese nicht sogar zerstört werden. Zudem sind oft längere Umrüst- sowie Justierarbeiten erforderlich, wenn von einem Werkzeug auf ein anderes gewechselt werden soll.

Aus diesem Grund liegt der Erfindung die Aufgabe zugrunde, eine Vorrichtung zum Manipulieren eines Werkzeuges der eingangs geschilderten Art derart auszugestalten, dass einerseits ein rascher Wechsel zwischen verschiedenen Werkzeugen untereinander möglich ist und dass bei der Verwendung von Messgeräten bzw. Prüfköpfen im Falle einer Kollision der selben mit den Werkstücken eine Beschädigung der Messgeräte bzw. Messköpfe vermieden werden kann.

Die Erfindung löst diese Aufgabe dadurch, dass die lösbare Befestigung des Werkzeuges über das Adapter am Träger mittels einer Magnetkupplung erfolgt, wobei das Adapter und der Träger über wenigstens eine Führung in Kupplungsstellung gegeneinander ausgerichtet gehalten sind.

Durch das Vorsehen einer Magnetkupplung zwischen Adapter und Träger ist in einfacher Weise gewährleistet, dass bei einer Überlast, insbesondere bei einem Anschlagen des Prüfkopfes oder Messgerätes an einem Werkstück das Werkzeug, insbesondere das Messwerkzeug, vom Träger gelöst wird, und somit größere Beschädigungen an Werkzeug und Werkstück vermieden werden können. Die Haltekraft derartiger Magnetkupplungen kann dabei insbesondere in beliebiger Weise eingestellt werden, um mit der Kupplung gleichermaßen Bearbeitungswerkzeuge wie auch Messwerkzeuge aufnehmen zu können. Um dabei zu gewährleisten, das die gegebenenfalls automatisiert aufnehmbaren Werkzeuge stets in einer exakt ausgerichteten Lage vom Träger aufgenommen werden, werden der Adapter und der Träger über wenigstens eine Führung in der Kupplungsstellung gegeneinander ausgerichtet gehalten. Diese Führung sorgt für eine vereinfachte Justierung des Werkzeuges bzw. Adapters am Manipulator.

Für den Fall, dass Werkzeuge vorgesehen sind, die mit einem Fluid versorgt werden müssen, empfiehlt es sich, wenn der Führung eine Steckkupplung für eine vom Manipulator zum Werkzeuge führende Fluidleitung zugehört. Derartige Fluidleitungen können beispielsweise Kühlflüssigkeit für Bearbeitungswerkzeuge oder Flüssigkeiten für Messgeräte zur Verfügung stellen, wie sie beispielsweise bei Ultraschallmessgeräten erforderlich sind, die einen Fluidstrahl gegen die zu vermessende Werkstückoberfläche richten, in welchen Fluidstrahl ein Ultraschallsignal eingekoppelt ist.

Besonders einfache Konstruktionsverhältnisse für die Führung ergeben sich, wenn die Führung Führungsöffnungen und in die Führungsöffnung in Kupplungsrichtung eingreifende Führungsstifte umfasst. Diese Führungsstifte können insbesondere auch kegelförmig oder dgl. ausgebildet sein, um die Lösbarkeit des Werkzeuges vom Träger bei Überbeanspruchung nicht in ungewollter Weise zu beeinträchtigen.

Die Magnetkupplung kann Permanentmagnete oder Elektromagnete umfassen, wobei die Haltekraft vorzugsweise in Abhängigkeit des jeweils angekuppelten Werkzeuges einstellbar ist. Beim Vorsehen von Permanentmagneten kann dazu die Haltekraft beispielsweise über die Anzahl der effektiv wirksamen Permanentmagnete eingestellt werden, wobei für Werkzeuge die weniger Haltekraft erfordern beispielsweise auf Gegenpole verzichtet werden kann. Über Elektromagnete kann die Haltekraft in bekannter Weise über die den Elektromagneten zugeführte Stromstärke eingestellt werden. Eine weitere Möglichkeit der Einstellung der Haltekraft ist gegeben, wenn Pol und Gegenpol der Magnete in Kupplungsstellung mit einem der gewünschten Haltekraft entsprechenden Abstand zueinander angeordnet sind.

Um die Haltekraft besonders vorteilhaft einstellen zu können bzw. um das angekuppelte Werkzeug automatisiert erkennen zu können, kann dem Adapter und/oder dem Werkzeug eine von einer Kontrolleinrichtung auslesbare, dem Werkzeug eindeutig zugeordnete Kennung zugehören. Dazu kann das Werkzeug bzw. das Adapter mit einem entsprechenden Speicher ausgestattet sein, der entweder über eine ebenfalls mit einer Kupplung im Übergangsbereich zwischen Adapter und Träger ausgestattete Leitung an die zentrale Kontrolleinrichtung angeschlossen ist, oder aber über eine Nahbereichsfunkverbindung bzw. über geeignete Näherungsschalter von geeigneten Sender/Empfängereinheiten auslesbar ist.

Um für den Fall einer Kollision des Werkzeuges mit einem Werkstück oder dgl., bei der die Kupplungskraft überwunden und das Werkzeug vom Träger gelöst wird eine Beschädigung des Werkzeuges durch ein Abfallen zu vermeiden, empfiehlt es sich, wenn der Adapter mit dem Werkzeug zusätzlich über ein Fangseil am Träger gesichert ist.

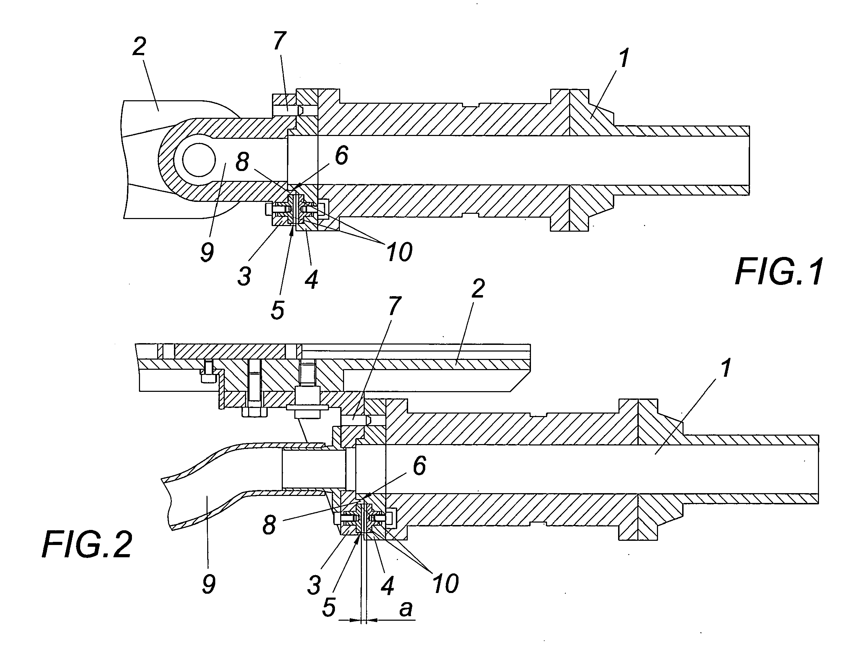

In der Zeichnung ist die Erfindung anhand eines Ausführungsbeispiels schematisch dargestellt. Es zeigen
- Fig. 1: eine erfindungsgemäße Vorrichtung im Querschnitt und
- Fig. 2: eine Konstruktionsvariante einer erfindungsgemäßen Vorrichtung im Querschnitt.

Eine Vorrichtung zum Manipulieren eines Werkzeuges 1, insbesondere eines Prüfkopfes umfasst einen an einem Manipulator 2 angeordneten Träger 3, an dem das Werkzeug 1 mit einem dem Werkzeug 1 zugeordneten Adapter 4 lösbar befestigt ist. Der Adapter 4 und das Werkzeug 1 bilden eine vormontierte Einheit, die gemeinsam lösbar am Träger 3 befestigbar ist. Die lösbare Befestigung des Werkzeuges 1 über das Adapter 4 am Träger 3 erfolgt erfindungsgemäß mittels einer Magnetkupplung 5, wobei das Adapter 4 und der Träger 3 über wenigstens eine Führung 6 in Kupplungsstellung gegeneinander ausgerichtet gehalten sind.

Die Führung 6 umfasst Führungsöffnungen und in die Führungsöffnung in Kupplungsrichtung eingreifende Führungsstifte 7. Des Weiteren gehört der Führung 6 eine Steckkupplung 8 für eine vom Manipulator 2 zum Werkzeug 1 führende Fluidleitung 9 zu, über welche Fluidleitung 9 beispielsweise ein Prüfkopf mit Fluid versorgt wird, das in weiterer Folge in Form eines Fluidstrahles gegen ein nicht näher dargestelltes Werkstück gerichtet ist und in welchen Fluidstrahl Messsignale, insbesondere Ultraschallsignale, einkoppelbar sind.

Die Magnetkupplung 5 umfasst im dargestellten Ausführungsbeispiel mehrere Permanentmagnete 10 über welche das Werkzeug 1 am Träger 3 lösbar gehalten wird. Pole und Gegenpole der Permanentmagnete 10 sind in Kupplungsstellung mit einem der gewünschten Haltekraft entsprechenden Abstand a zueinander angeordnet.

## Patentansprüche

1. Vorrichtung zum Manipulieren eines Werkzeuges (1), insbesondere eines Bearbeitungs- oder Messwerkzeuges, mit einem an einem Manipulator (2) angeordneten Träger (3), an dem das Werkzeug (1) mit einem dem Werkzeug (1) zugeordneten Adapter (4) lösbar befestigt ist, **dadurch gekennzeichnet, dass** die lösbare Befestigung des Werkzeuges (1) über das Adapter (4) am Träger (3) mittels einer Magnetkupplung (5) erfolgt, wobei das Adapter (4) und der Träger (3) über wenigstens eine Führung (6) in Kupplungsstellung gegeneinander ausgerichtet gehalten sind.

2. Vorrichtung nach Anspruch 1, **dadurch gekennzeichnet, dass** der Führung (6) eine Steckkupplung (8) für eine vom Manipulator (2) zum Werkzeug (1) führende Fluidleitung (9) zugehört.

3. Vorrichtung nach Anspruch 1 oder 2, **dadurch gekennzeichnet, dass** die Führung (6) Führungsöffnungen und in die Führungsöffnungen in Kupplungsrichtung eingreifende Führungsstifte (7) umfasst.

4. Vorrichtung nach einem der Ansprüche 1 bis 3, **dadurch gekennzeichnet, dass** dem Adapter (4) und/oder dem Werkzeug (1) eine von einer Kontrolleinrichtung auslesbare, dem Werkzeug (1) eindeutig zugeordnete Kennung zugehört.

5. Vorrichtung nach einem der Ansprüche 1 bis 4, **dadurch gekennzeichnet, dass** die Magnetkupplung (5) Permanentmagnete (10) und/oder Elektromagnete umfasst, wobei die Haltekraft vorzugsweise in Abhängigkeit des jeweils angekuppelten Werkzeuges (1) einstellbar ist.

6. Vorrichtung nach einem der Ansprüche 1 bis 5, **dadurch gekennzeichnet, dass** der Adapter (4) mit dem Werkzeug (1) zusätzlich über ein Fangseil am Träger (3) gesichert ist.

7. Vorrichtung nach einem der Ansprüche 1 bis 6, **dadurch gekennzeichnet, dass** Pol und Gegenpol der Magnetkupplung (5) in Kupplungsstellung mit einem der erzielbaren Haltekraft entsprechenden Abstand (a) zueinander angeordnet sind.
